# EUROPEAN PATENT APPLICATION

(11) **EP 1 946 964 A1**
(43) Date of publication of application: **23.07.2008**
(21) Application number: 07111523.2
(22) Date of filing: 02.07.2007
(51) Int. Cl.: B60P 1/54, B66C 23/68

(54) **Load Handling Machine**

(30) Priority: 19.01.2007 IT VR20070004 U
(71) Applicant: Baruffaldi, Patrizia, 42011 Bagnolo di Piano (RE) (IT)
(72) Inventor: Baruffaldi, Patrizia, 42011 Bagnolo di Piano (RE) (IT)
(74) Representative: Reniero, Cirillo Silvano

(57) **Abstract**

The present invention relates to a load handling machine comprising:
- at least one support base (3),
- at least one upright element including at least one column element (4) upward extending from the base (3), and having one end thereof articulated to said support base (3), and at least one upper upright element (5) which is articulated to the column element (4),
- a cantilever arm (6) having a proximal end articulated to the at least one upper upright element (5) and a free end (FE),
the load handling machine further comprising actuation means (8, 13) designed to cause angular displacements of at least the upper upright element (5) with respect to the column element either in one direction of rotation around a horizontal axis or in the opposite direction so as to be angularly oriented both forward and rearward with respect to a vertical axis (y-y), thereby making it possible to displace loads (L) located in any area within the range covered by the load handling machine.

## Description

The present invention relates to a load handling machine, such as a crane, and more particularly a crane especially suitable for installation on a lorry for loading/downloading loads onto and from the lorry.

Conventional lorry cranes usually comprise a support base and a telescopic arm, which extends cantileverwise from the support base and comprises a plurality of lengths slidingly mounted one inside the other. A type of lorry crane comprises:
- a support base which is movably mounted on a pair of guides located between cab and body of a lorry, in such a way that, upon control, it can effect transverse translation movements with respect to the center line of the lorry,
- a lower upright element, the so-called "column element", which extends upwards from, and is articulated to, the base;
- an upper upright element which is articulated, in use, to the upper end of the lower upright element; and
- a telescopic arm which extends cantileverwise from the upper upright element.

A respective double-acting oil-operated jack, which is controlled by a suitable control unit, is provided between upper and lower upright elements and between upper upright element and telescopic arm. Owing to combined movements of transverse translation of the support base and angular displacements of lower and upper upright elements as well as to the extension-retraction movements of the cantilever telescopic arm it is possible to handle loads or parcels between the ground and the loading platform of the lorry.

In solutions proposed up to now the upper upright element is articulated to the lower upright element, and thus it can be caused to angularly displace between a substantially vertical position and a position in which it is inclined rearwardly towards the loading platform.

With such a crane structure, the free end of the telescopic arm cannot reach some areas of the loading platform which are located close to the crane column element, and thus a parcel previously placed onto one of such areas would not be lifted or otherwise handled by the crane and has first to be manually moved rearwards on the loading platform of the lorry. Alternatively, a first length of the telescopic arm, i. e. its proximal end that is engaged by the upper upright element, is provided much smaller in length than the remaining arm lengths, which, however, would drastically shorten the range covered by the crane.

A main object of the present invention is to provide a load handling or crane machine which is particularly suitable for being installed on a lorry or the like vehicle in order to load/unload loads or parcels located in any area or zone of the loading platform of the lorry.

These and still other objects, which will be better apparent below, are achieved by a load handling or crane machine comprising:
- at least one support base,
- at least one upright element each comprising at least one lower column element extending upwards from the support base and having one end thereof articulated to the support base, and at least one upper upright element having one end thereof articulated to the column element,
- a cantilever arm having its proximal end articulated to a respective upper upright element, and
- actuation means designed to allow angular displacements at least of the upper upright element with respect to the column element either in one direction of rotation around a horizontal axis or in the opposite direction so as to be angularly oriented both forward and rearward with respect to a vertical axis, thereby making it possible to displace loads located in any area within the range covered by the load handling machine.

Further aspects and advantages of the present invention will be better apparent from the following detailed description of specific embodiments of a crane machine, reference being made to the accompanying drawings, in which:
Figures 1 and 2 are side views of a first embodiment of crane according to the present invention mounted on a lorry for loading/unloading parcels between the lorry loading platform and the ground;
Figures 3 and 4 are side views of a second embodiment of a crane according to the present invention mounted on a lorry for loading/unloading parcels between the loading platform and a floor at a higher level with respect thereof.

In the drawings, equal or similar parts or components are marked with the same reference numerals.

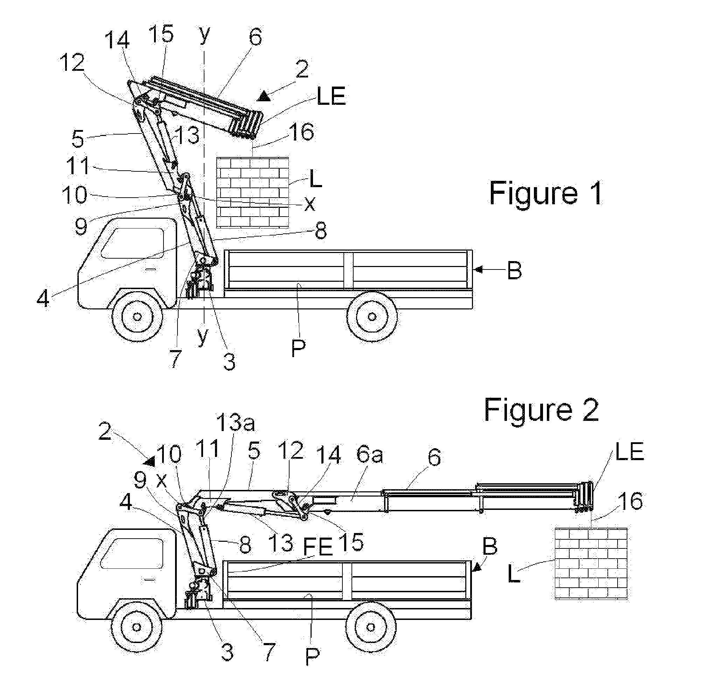

With reference first to Figures 1 and 2 of the drawings, there is illustrated a crane machine crane 2 having a support base 3, a lower column element 4 articulated to the support base 3 and extending upwards from the support base 3. At the top thereof, the column element 4 is articulated to an upper upright element 5, which is designed to support a cantilever arm, e. g. a telescopic arm 6, which is pivotably attached thereto at its proximal end thereof and has its free or remote load lifting end LE. The crane machine 2 is advantageously mounted on a lorry C, e. g. between the cab CB and the body B of the lorry, so as the free end of the telescopic arm 6 is located, in use, above the loading platform P of the lorry.

With the above described structure, the upper upright element 5 can be angularly displaced with respect to the column element 4 either in one direction of rotation around a horizontal axis x or in the opposite direction so as to be angularly oriented both forward and rearward with respect to a vertical axis y-y. Thus, the lifting end LE of the telescopic arm 6 can be displaced between loading/unloading positions substantially over the front edge FE of the body B close to the support base 3 and loading/unloading positions far from the support base.

More particularly, one or preferably a pair of brackets 7 (only one being visible in the drawings) is secured to a lower portion of the column element 4. One end of a linear actuator, e. g. a pneumatic or oil-operated jack 8, which extends parallel to the column element 4, is articulated to the brackets 7. Another or preferably a pair of brackets 9 are also fixed to the other end of the column element 4. A link member or a pair of link members 10 is articulated at one end thereof to the brackets 9, the other end of the link member 10 being pivoted to the proximal or lower end of the upper upright element 5.

The lower end of the upper upright element 5 is provided with two web or plate elements or a fork 11 secured thereto, each web or plate element or fork 11 being pivotably connected to a respective bracket 9.

The other end of the linear actuator, i. e. the stem 8a of the pneumatic jack 8 as shown in the drawings, is articulated to the lower end of the upper upright element 5 to which the link member or members 10 are also pivoted, whereas a fork 12 designed to anchor and pivotably support the telescopic arm 6 is secured to the other (upper) end of the upper upright element 5.

The crane further comprises a second linear actuator, e. g. a pneumatic or oil-operated jack 13, one end thereof being articulated to the web elements or fork 11, whereas its other end 13a is articulated to, and designed to angularly displace both the upper upright element 5 and a second link member or pair of link members 14. More particularly, the second link member or members 14 at its end pivoted to the stem 13a of jack 13, is also articulated to a respective stirrup 15 which is, in turn, secured to the telescopic arm 6, whereas at its other end it is articulated to the fork 12 secured to the upper upright element 5.

The telescopic arm 6 comprises a plurality of mutually extractable-retractable lengths preferably having substantially the same length, and at its free end FE it supports a rope or cable 16 arranged to engage a load or package L to be handled, e. g. by means of a hook (not shown) or the like. More particularly, a length 6a is the length arranged proximal to the upper upright element 5 and bears the stirrup(s) 15.

With such a structure, the upper upright element 5 can be angularly displaced with respect to column element 4 so as to displace its free end or lifting tip FE between loading/unloading positions close to the support base 3 (Fig. 1), i. e. substantially over the front edge FE of the body, where the upper upright element 5 is inclined backwards (in anticlockwise direction when looking Figure 1) with respect to a vertical line y-y, and loading/unloading positions far from the support base 3, in which the upper upright element 5 is inclined backward, i. e. in the opposite clockwise direction, with respect to the vertical line y-y.

Preferably, when the crane is arranged in a loading/unloading trim, i. e. with the free end FE of the telescopic arm 6 above and close to the support base 3, the upper upright element 5 can be inclined with respect to the vertical line through an angle ranging from a few to about 80 degrees forward. In such a configuration or trim of the crane, the column element 4 and the upper upright element 5 are arranged in substantial alignment with one another (Figure 1).

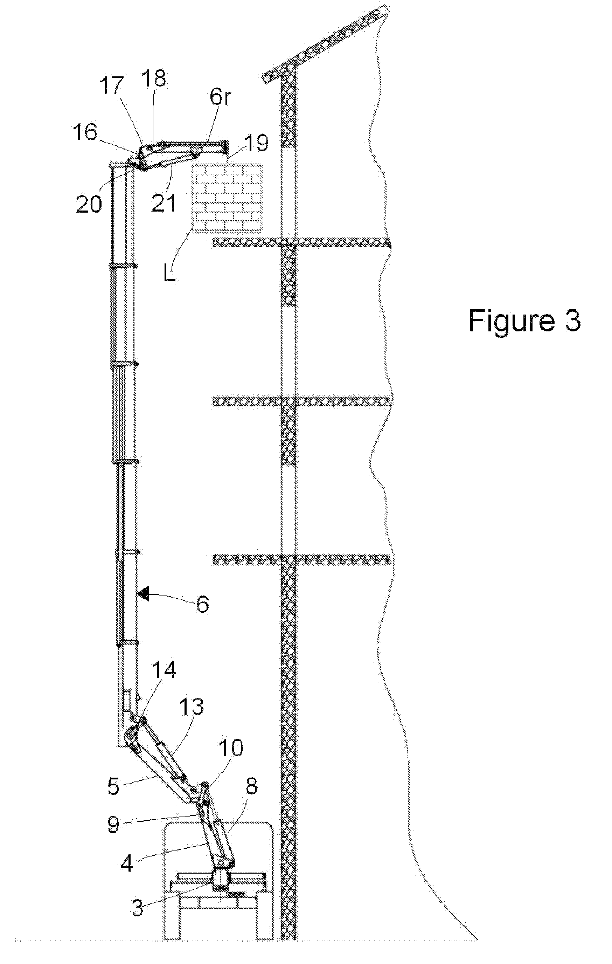

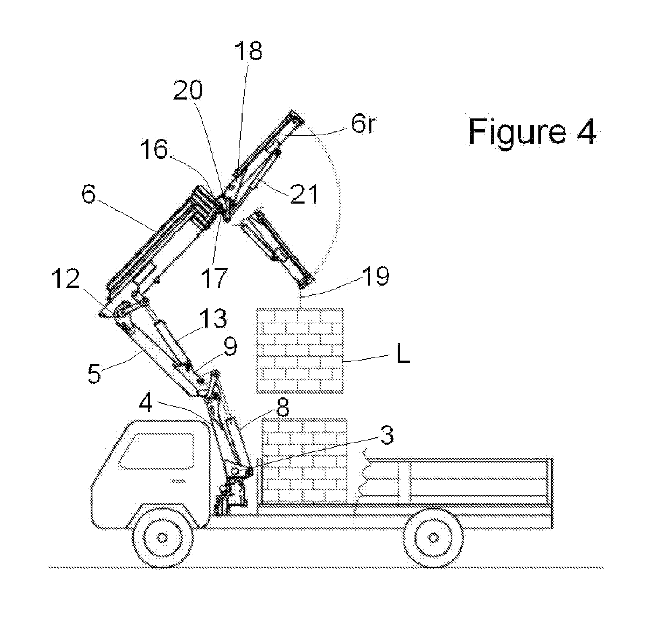

Figures 3 and 4 show a second embodiment of a crane according to the present invention in which the remote length 6r of the telescopic arm 6, i. e. the length with the free or lifting end FE for the arm 6, is not telescopically engageable with arm 6 but articulated thereto at 16. More particularly, the telescopic arm 6 is pivoted at its end closer to remote length 6r to one or preferably a pair of bracket members 17 which are articulated to web or plate elements 18 secured to the remote length 6r that is designed, in turn, to support a wire or rope 19 at its free end. One or a pair of link members 20 have one end thereof pivoted to the bracket members 17 and their other end pivoted to the plate elements 18. A linear actuator 21, e. g. a fluid operated jack, is pivoted at its ends to an intermediate portion of the remote length 6r and the link members 20. Upon extension-retraction of the linear actuator 21 the remote length 6r is caused to be angularly displaced about its pivotal axis of rotation 16.

Thus, a crane provided with a remote length 6r as described above can lift or lower packages to and from levels much higher up to 15 m or more, i. e. heights not reachable with conventional cranes of this type. With reference in particular to Figure 3, the telescopic arm 6 of a crane according to the invention can be set and kept in vertical trim during loading/downloading operations, the remote length 6r actually engaging the load or package to be handled being arranged cantileverwise with respect of the telescopic arm 6.

If, for example, the crane is arranged in loading/unloading trim with its free end FE far from the support base 3 (Figure 2), and thus the upper upright element 5 is inclined with respect to the vertical line y-y at an angle of about 90° backwards and the telescopic arm 6 is arranged in an lengthened or extended configuration in substantial alignment with the upper upright element 5, an extension of jack 8 would cause the end of the upper upright element 5 articulated to it, and thus also the telescopic arm 6, to be angularly displaced with respect to the column element 4.

A simultaneous or subsequent retraction of jack 13 results in the telescopic arm 6 being angularly displaced with respect to the upper upright element 5.

These movements can be caused until the upper upright element 5 has reached alignment with the vertical line y-y and is further angularly displaced forward until to delimit an inclination angle with the vertical line y-y ranging from a few degrees to about 80 degrees.

The column element 4 can be mounted for rotation about a substantially vertical axis on the support base 3, so that the free end FE of the crane can be rotate in both directions through 180 degrees or more. Moreover, the column element 4 is articulated about a horizontal axis to the support base 3, which makes it possible for the length 6a to be much longer than in conventional cranes of this type precisely owing to the fact that the inclination of the unit comprising the column element 4 and the upper upright element 5 with respect to the vertical line y-y, can be made higher than in conventional cranes.

A package can thus be downloaded (see in particular Figure 1) from the loading platform P, even if located at an area close to the base 3 or to the front edge of the body B of the lorry, onto a ground area, even if very close to the side of the lorry.

With a crane according to the present invention it is also possible to load/download to and from the load platform P packages located close to the support base 3, also while the telescopic arm 6 is partly or fully extended. In fact, when the upper upright element 5 is inclined forward through an angle from a few degrees to about 80° with respect to the vertical line y-y, and when the telescopic arm 6 is partly angularly displaced upwards with respect to a horizontal line in order to arrange the arm free end FE above a zone close to the support base 3, the telescopic arm 6 can be kept partly extended (Figure 3). Thus, it is not necessary to fully retract the telescopic arm 6 in order to displace a load L within the entire range of the crane.

Moreover, when a crane according to the present invention is in its loading/downloading trim with its free end FE arranged above an area close to the support base 3, the angular momentum which is generated at the pivotal pin between the upper upright element 5 to the column element 4 by the load L to be displaced, is at least partly counterbalanced by the upper upright element 5. In fact, see in particular Figure 1, the upper upright element 5 and the load L are arranged one opposite to the other with respect to a vertical line, and thus their momentums are oriented in opposite directions. Accordingly, a crane according to the present invention is more stable with respect to conventional cranes of the same kind.

The crane machine described above is susceptible to numerous modifications and variations within the protection scope as defined by the claims.

## Claims

1. A load handling machine comprising:
- at least one support base (3),
- at least one upright element including at least one column element (4) upward extending from said base (3), and having one end thereof articulated to said support base (3), and at least one upper upright element (5) which is articulated to said column element (4),
- a cantilever arm (6) having a proximal end articulated to said at least one upper upright element (5) and a free end (FE),
**characterized in that** it comprises actuation means (8, 13) designed to cause angular displacements of at least said upper upright element (5) with respect to said column element either in one direction of rotation around a horizontal axis or in the opposite direction so as to be angularly oriented both forward and rearward with respect to a vertical axis (y-y), thereby making it possible to displace loads (L) located in any area within the range covered by the load handling machine.

2. A machine as claimed in claim 1, **characterized in that** said actuation means comprises linear actuator means (8) designed to act between said column element (4) and said upper upright element (5).

3. A machine as claimed in claim 1 or 2, **characterized in that** it comprises linear actuator means designed to act between said upper upright element (5) and said cantilever arm (6).

4. A machine as claimed in any previous claim, **characterized in that** said upper upright element (5) can be inclined, in use, with respect to the vertical line (y-y) at an angle ranging from a few degrees up to 90 degrees on opposite sides of said vertical line (y-y).

5. A machine as claimed in any previous claim, **characterized in that** it comprises rotary means for said column element (4) to rotate with respect to said support base (3).

6. A machine as claimed in any previous claim, **characterized in that** said column element (4) extends, in use, substantially inclined on opposite sides with respect to said vertical line (y-y).

7. A machine as claimed in claim 6, **characterized in that** said upper upright element (5) is in substantial alignment with said column element (4), when said cantilever arm (6) is in a loading/unloading trim close to said support base (3).

8. A machine as claimed in any previous claim, **characterized in that** said arm comprises a telescopic arm (6).

9. A machine as claimed in claim 8, **characterized in that** said telescopic arm comprises a plurality of lengths at least partly slidingly mounted one inside the other, said lengths having substantially the same length.

10. Machine as claimed in claim 8 or 9, **characterized in that** said telescopic arm (6) is articulated at one end thereof to the upper upright element (5), whereas at its other end it is linked to a remote non-telescopic length (6r).

11. Machine as claimed in claim 10, **characterized in that** comprises:
- at least one bracket member (17), having one end thereof pivoted to a respective end of said telescopic arm (6) and its other end articulated to at least one web or plate element (18) secured to said remote length (6r);
- at least one link member (20) having one end thereof pivoted to said at least one bracket member (17) and its other end linked to said at least one plate element (18);
- at least one linear actuator (21) having one end thereof pivoted to said remote length (6r) and its other end pivoted to said at least one link member (20).

12. A machine as claimed in any previous claim, **characterized in that** it is mounted on a lorry.

13. A machine as claimed in any previous claim, **characterized in that** it comprises articulation means comprising:
- at least one bracket or pair of brackets (9) which is secured to said column element (4),
- a link member or a pair of link members (10) articulated to said at least one bracket (9) and to said upper upright element (5);
- at least one plate element (11), which is secured to said upper upright element (5) and pivoted to said at least one bracket (9),
said link member (10) being articulated to said linear actuator (8).
